# EUROPÄISCHE PATENTSCHRIFT

(11) **EP 3 394 789 B1**
(45) Veröffentlichungstag und Bekanntmachung des Hinweises auf die Patenterteilung: **17.02.2021**
(21) Anmeldenummer: 16816200.6
(22) Anmeldetag: 20.12.2016
(51) Int. Cl.: G06F 21/72, H04W 12/04, G06Q 20/34, G06F 21/85

(54) **MICRO-CONTROLLER UNIT MCU MIT SELEKTIV KONFIGURIERBAREN KOMPONENTEN**
MICROCONTROLLER UNIT (MCU) COMPRISING SELECTIVELY CONFIGURABLE COMPONENTS
UNITÉ DE MICROCONTRÔLEUR MCU COMPORTANT DES COMPOSANTS CONFIGURABLES SÉLECTIVEMENT

(30) Priorität: 21.12.2015 DE 102015016637
(43) Veröffentlichungstag der Anmeldung: 31.10.2018
(73) Patentinhaber: Giesecke & Devrient GmbH, 81677 München (DE)
(72) Erfinder: SCHWARTZ, Udo, 81541 München (DE); STADLER, Kurt, 82041 Oberhaching (DE)
(86) Internationale Anmeldenummer: PCT/EP2016/002144
(87) Internationale Veröffentlichungsnummer: WO 2017/108180

(56) Entgegenhaltungen:
- US-A1- 2004 250 066
- US-A1- 2014 089 113
- US-A1- 2014 256 251
- US-B1- 7 389 415

## Beschreibung

### Gebiet der Erfindung

Die Erfindung betrifft allgemein das Gebiet des Konfigurierens von Komponenten in Computersystemen. Die Erfindung betrifft genauer eine Micro-Controller Unit MCU mit selektiv konfigurierbaren Komponenten.

### Stand der Technik

Die Sicherheit allgemeiner informationstechnischer Systeme wird maßgeblich durch die gesicherte Administration von Ressourcen durch autorisierte Komponenten bestimmt. Ressourcen sind hierin insbesondere interne Komponenten des Systems (z.B. Speicher, Schnittstellen, Prozessoren) und Daten innerhalb von Komponenten.

Secure Elements sind spezielle Einzel-Chip Plattformen, die ein hohes Maß an Manipulationssicherheit bieten und in besonderer Weise für die Realisierung von sicherheitskritischen Funktionen vorbereitet sind. Secure Elements sind sichere Container für sensible Daten und können sichere Anwendungen hosten.

Micro-Controller, oder gleichbedeutend Micro-Controller Units MCUs, sind Ein-Chip Computer Systeme, die eine Mehrzahl von Komponenten enthalten. Die Komponenten einer MCU umfassen einen oder mehrere Rechenkerne (Cores) und zudem weitere Chip-Komponenten (oder gleichbedeutend Peripherie-Komponenten) wie z.B. Speicher und Schnittstellen. Die Rechenkerne und weiteren Chip-Komponenten sind dabei auf nur einem einzigen Halbleiter-Chip verwirklicht.

MCUs werden beispielsweise als Hauptprozessoren in mobilfunkfähigen Endgeräten wie Smartphones, Tablet PCs, PDAs und dergleichen sowie in programmierbaren Steuerungen in der industriellen Fertigung (ICS, Industrial Control Systems) verwendet.

Moderne MCU-Architekturen erlauben es, einzelne Ressource-Komponenten (mit dem aus dem Englischen übernommenen Begriff auch "ressource features" oder "features" genannt), insbesondere Chip-Hardware-Komponenten wie z.B. Prozessoren und Schnittstellen aber auch Hardware-Funktionen zur Beschleunigung von Anwendungen und insbesondere des Betriebssystems, zu konfigurieren. Insbesondere können Komponenten freigeschalten oder parametrisiert und personalisiert werden. Insbesondere können Komponenten erst im Feld freigeschalten oder parametrisiert und personalisiert werden, nachdem die MCU bereits ihre Produktionsumgebung verlassen hat und sich bei einem Händler oder Endkunden befindet. Konfigurierbare MCUs bieten dem Endgeräte-Hersteller oder generell dem OEM (Original Equipment Manufacturer), dass er für unterschiedliche Geräte mit unterschiedlichen Funktions-Eigenschaften denselben MCU-Typ verwenden kann und die unterschiedlichen Funktions-Eigenschaften durch unterschiedliche Konfigurationen der MCU erreichen oder unterstützen kann.

Um eine Konfigurierbarkeit von Ressource-Komponenten (features) sicherzustellen, hat die MCU einen Ressource-Manager (feature enable controller), eine spezielle, üblicherweise in Hardware gestaltete Logik zur Konfigurierung der Ressource-Komponenten. In einem Grundzustand der MCU sind beispielsweise manche oder alle Ressource-Komponenten (features) in einem Grundzustand, z.B. nicht-aktiviert. Um Ressource-Komponenten (features) der MCU zu konfigurieren, wird durch einen Administrations-Server ein Konfigurierungs-String (feature enable pattern) an die MCU gesendet. Der Ressource-Manager (feature enable controller) wertet den Konfigurierungs-String (feature enable pattern) aus und schaltet die dem Konfigurierungs-String (feature enable pattern) entsprechende Konfigurierung von Ressource-Komponenten (features), insbesondere durch selektives Aktivieren einzelner Ressource-Komponenten (features).

Die Administration der Ressourcen in einer MCU ist hochgradig sicherheitsrelevant. Zum einen haben MCUs mit einem höheren Funktionsumfang teils einen höheren Verkaufspreis, so dass eine unautorisierte Änderung der Konfiguration der MCU einen direkten kommerziellen Schaden zur Folge haben könnte. Zum anderen sind Funktionalitäten von MCU und Endgerät teilweise aufeinander abgestimmt. Somit kann eine unautorisierte Änderung der Konfiguration der MCU gravierende Funktionsstörungen bewirken. Die Administration der Ressourcen darf daher nur durch autorisierte Einheiten erfolgen. Die MCU muss somit Funktionalität anbieten, um diese Sicherheitsanforderungen zu erfüllen und den Zugriff auf seine Ressourcen, um die Konfiguration der MCU zu ändern, auf autorisierte Komponenten oder Einheiten zu beschränken.

Jeder Sicherheitsdienst, so auch ein Sicherheitsdienst zum Ändern einer Konfiguration einer MCU, benötigt eine sichere Enklave, da für die Implementierung des Sicherheitsdienstes vertrauliche Daten und Schlüssel verwendet werden.

Würde einem Angreifer die Ausspähung vertraulicher Daten oder Schlüssel zum Ändern der Konfiguration einer MCU gelingen, wäre unter Umständen die Sicherheit nicht nur der MCU, sondern ganzer Systeme kompromittiert. Würden beispielsweise geheime Daten und Schlüssel zum Konfigurieren der MCU eines mobilen Endgeräts für ein Mobilfunksystem ausgespäht, würde das ganze System des Endgeräte-Herstellers zum Vertrieb unterschiedlicher Endgeräte mit ein und demselben, lediglich unterschiedlich konfigurierten, MCU-Typ kompromittiert.

Eine denkbare Lösung für eine gesicherte MCU wäre, dass die MCU für einen sicheren Ausführungsmodus konfiguriert ist, in welchem die MCU zusätzliche Hardware (trusted hardware) und /oder Software verwendet. Derartige Lösungen bedeuten einen erheblichen Zuwachs an Chip-Fläche der MCU und eine erhöhte Laufzeit oder verringerte Performanz der MCU. Da der Platz in mobilen Endgeräten knapp bemessen ist, ist eine kleine Chipfläche wünschenswert und jede Vergrößerung der Chipfläche von Nachteil. Immer komplexere Applikationen auf Endgeräten fordern von der MCU eine immer höhere Performanz.

Das Dokument EP 2797294 A1 offenbart ein drahtloses Gerät, das eine Aktivierung von Funktionen (sogenannten Features) auf dem drahtlosen Gerät durch eine Applikation auf Gerät ermöglicht. US 2015074815 A1 offenbart einen Computer mit Hardware-Modulen mit selektiv aktivierbaren Features. US 6853983 B1 offenbart eine selektive Aktivierung von Funktionen (Software oder Hardware) in einem Device, z.B. einem automatisierten Zahlungsgerät, durch Ändern eines numerischen Werts mittels einer in das Gerät eingeführten Chipkarte.

Das Dokument [4] US 2014/256251 A1 aus dem Stand der Technik offenbart eine Microcontroller-Anordnung gemäß dem Oberbegriff von Anspruch 1. Genauer offenbart US 2014/256251 A1 ein mobiles Gerät umfassend einen drahtlosen Transceiver, einen Host-Prozessor, ein sicheres Element (SE) und ein Nahfeldkommunikationssystem (NFC) mit einem NFC-Transceiver und einem NFC-Controller, der ein kontaktloses Frontend implementiert. Mittels von einem Server an das Gerät gesendeter Schlüssel lassen sich Ressourcen (features) des Geräts entsperren.

Das Dokument [5] US 2014/089113 A1 aus dem Stand der Technik offenbart eine Computerarchitektur, mit einem Ressourcen-Manager (feature allocation engine), durch den sich Ressourcen (features) in der Computerarchitektur freischalten lassen.

Das Dokument [6] US 2004/250066 A1 aus dem Stand der Technik offenbart eine Smartcard-Architektur mit mehreren Komponenten, zwischen denen sich Secure Channels aufbauen und betreiben lassen.

Das Dokument [7] US 7 389 415 B1 aus dem Stand der Technik offenbart einen kryptographischen Chip, in welchem sich Ressourcen (features) gezielt aktivieren lassen, indem den Ressourcen zugeordnete verschlüsselte Token entschlüsselt werden.

### Zusammenfassung der Erfindung

Der Erfindung liegt die Aufgabe zu Grunde, eine Micro-Controller Unit MCU mit einer sicheren Infrastruktur zum selektiven Konfigurieren von Komponenten der MCU zu schaffen, wobei die Chipfläche und/oder die Performanz der MCU trotz der sicheren Infrastruktur möglichst wenig oder zumindest nicht wesentlich zum Schlechteren verändert werden.

Die Aufgabe wird gelöst durch eine Microcontroller-Anordnung, bei der die eigentliche Micro-Controller Unit MCU durch ein gesondertes autorisiertes Secure Element auf einem separaten Chip ergänzt ist.

Die Microcontroller-Anordnung umfasst einen Chip mit einer darauf als integrierte Schaltung vorgesehenen Microcontroller-Unit MCU. Die MCU umfasst ein oder mehrere Ressource-Komponenten (ressource features), die jeweils eine Konfiguration haben, die jeweils zwischen zumindest zwei unterschiedlichen möglichen Konfigurationen schaltbar ist. Die MCU umfasst weiter einen Ressource-Manager (feature enable controller), der eingerichtet ist, einen Konfigurierungs-String (feature enable pattern) zu empfangen und die ein oder mehreren Ressource-Komponenten in eine dem Konfigurierungs-String entsprechende Konfiguration zu schalten.

Die Microcontroller-Anordnung ist gekennzeichnet durch:
- einen von der Microcontroller-Anordnung weiter umfassten, mit dem Chip elektrisch gekoppelten Sekundär-Chip mit einem darauf als integrierte Schaltung vorgesehenen Secure Element; und
- eine Secure Channel Infrastruktur, eingerichtet zum Betreiben eines Secure Channel (CH) zwischen dem Ressource-Manager (RM) und dem Secure Element (SE), so dass der Ressource-Manager (RM) unter exklusiver Steuerung des Secure Element (SE) steht.

Von der Sicherheit her ist die Microcontroller-Anordnung nach Anspruch 1 somit hochwertiger als eine MCU mit integrierten Konfigurierungs-Funktionalitäten für Ressource-Komponenten, da der Sekundärchip durch spezielle Technologien gegen Ausspähung gesichert werden kann und ein autorisierter Zugriff auf die kritischen Ressourcen realisiert wird.

Die MCU selbst bleibt im Wesentlichen unverändert. Lediglich Maßnahmen zum Ermöglichen des Secure Channel sind in der MCU erforderlich, sowie die ohnehin erforderlichen Funktionen (bzw. "Gates") zur Konfigurierung der Komponenten. Folglich bleibt der Bedarf an zusätzlicher Chipfläche minimal. Die Performanz der MCU wird nur höchstens wenig oder zumindest nicht wesentlich zum Schlechteren verändert.

Die erfindungsgemäße Microcontroller-Anordnung erlaubt somit die Administration von MCU-Ressourcen durch ein Secure Element. Der Overhead zur Implementierung der Sicherheitsfunktionen in der MCU kann so erheblich reduziert werden, während die Vorzüge des Secure Element als Spezial-Controller zur Realisierung von Sicherheitsfunktionen auf die Administration von MCU Ressourcen angewendet werden kann.

Daher ist gemäß Anspruch 1 eine sichere und Chipfläche und Performanz im Wesentlichen erhaltende Microcontroller-Anordnung geschaffen.

Die Vorteile einer erfindungsgemäßen Microcontroller-Anordnung in diversen Ausgestaltung sind unter anderem dass:
- der Ressource Manager von teuren kryptographischen Funktionen entlastet ist (dadurch kann z.B. bei einer Hardware-Implementierung erheblich Chip-Fläche eingespart werden);
- der Ressource-Manager mit einer anderen Technologie als der Klient Secure Element (steuernde Komponente) realisiert werden kann;
- das Secure Element spezielle Technologien zur Verhinderung von Ausspähung einsetzen kann, die mit dem Chip-Design der MCU nicht verträglich wären, und somit eine bessere Absicherung von Security Assets erreichbar ist;
- die erforderliche Flexibilität, um unterschiedlichen Konfigurierungs-Wünschen nachkommen zu können, im Secure Element umgesetzt werden kann, während der Ressource-Manager eine generische Funktionalität und eine statische Schnittstelle implementiert;
- das Secure Element auch Abhängigkeiten von Ressourcen, die in unterschiedlichen Ressource-Managern liegen, abbilden kann.

Als Ressource-Komponente ist/sind wahlweise ein oder mehrere der folgenden Hardware-Komponente vorgesehen: ein Prozessorkern (auch Core genannt); ein Coprozessor, insbesondere ein Krypto-Coprozessor; ein Schnittstellen-Element, z.B. ein UART; ein Speicher-Element, insbesondere ein nichtflüchtiges Speicher-Element wie ROM, EEPROM oder Flash, oder ein flüchtiges Speicher-Element wie RAM; ein Register; Hardware-Beschleunigung für Betriebssystem-Funktionen und Anwendungsfunktionen (z.B. Grid, Instruktionen für Matrizen-Berechnung, Bildbearbeitung usw.).

Bei einem Verfahren zur Provisionierung sendet ein externer Server, z.B. ein Trusted Service Manager TSM, den Konfigurierungs-String (feature enable pattern) an das Secure Element. Wahlweise wird zwischen dem Server und dem Secure Element hierzu ein erster Secure Channel betrieben. Wahlweise ist im Secure Element eine Applikation (z.B. ein Applet) vorgesehen, um den Konfigurierungs-String (feature enable pattern) zu handhaben. Das Secure Element sendet den Konfigurierungs-String (feature enable pattern) über einen zweiten Secure Channel weiter an den Ressource Manager (feature enabler). Die MCU wertet den Konfigurierungs-String (feature enable pattern) des Ressource Managers aus und richtet in der MCU die entsprechende Konfiguration ein. Der Konfigurierungs-String ist z.B. ein durch die MCU direkt auf Hardware-Ebene interpretierbares Bitmuster ("pattern").

Als Ressource-Komponente ist weiter wahlweise eine durch eine Hardware-Komponente bereitgestellte Funktionalität vorgesehen, insbesondere eine der folgenden Funktionalitäten: ein auf einem Prozessorkern oder Coprozessor ausführbares Kommando, z.B. ein Schreibkommando oder ein Lesekommando; ein auf einem Coprozessor ausführbarer kryptographischer Algorithmus; eine Hardware-Erweiterung und Unterstützung für das Betriebssystem; Hardware-Unterstützung für Anwendungs-Funktionen (z.B. Bildbearbeitung). Eine Hardware-Ressource-Komponente kann wahlweise mehrere Funktionalitäten umfassen. Wahlweise sind alle oder nur manche Funktionalitäten konfigurierbar.

Als Konfiguration der Ressource-Komponente ist wahlweise eines der folgenden oder eine Kombination mehrerer der folgenden vorgesehen: ein Aktivierungs-Zustand, insbesondere aktiviert oder deaktiviert; ein Wert eines Parameters oder eine Parameter-Konfiguration von Werten einer Mehrzahl von Parametern; ein Personalisierungszustand, insbesondere personalisiert oder nicht-personalisiert; ein Funktionsumfang, insbesondere ein Funktionsumfang umfassend ausgewählte Funktionalitäten einer Hardware-Komponente; ein Freischaltungs-Zustand, insbesondere freigeschalten oder gesperrt; jeweils der Ressource-Komponente.

Aus physischer Sicht verläuft die Kommunikation zwischen dem MCU und dem Secure Element über einen unsicheren Kanal. Sicherheit in der Kommunikation zwischen MCU und Secure Element wird durch den Betrieb eines Secure Channel erzielt.

Der Secure Channel ist wahlweise eingerichtet, Kommunikation zwischen dem Ressource-Manager der MCU und dem Secure Element verschlüsselt mit einem zwischen dem Ressource-Manager und dem Secure Element vereinbarten symmetrischen Verschlüsselungsschlüssel durchzuführen.

Die Secure Channel Infrastruktur umfasst wahlweise Secure Channel Assets. Die Secure Channel Assets sind dazu eingerichtet, den symmetrischen Verschlüsselungsschlüssel zwischen dem Ressource-Manager und dem Secure Element zu vereinbaren. Die Verschlüsselungsschlüssel-Vereinbarung kann insbesondere entweder durch direkten Austausch des Verschlüsselungsschlüssels erfolgen, oder alternativ durch ein Schlüsselvereinbarungs-Protokoll, insbesondere Diffie-Hellman-Schlüsselvereinbarungs-Protokoll. Die Secure Channel Assets umfassen ein in der MCU gespeichertes asymmetrisches Schlüsselpaar des Ressource Managers, umfassend einen geheimen Schlüssel SK.RM und einen öffentlichen Schlüssel PK.RM des Ressource Managers. Die Secure Channel Assets umfassen weiter ein im Secure Element gespeichertes asymmetrisches Schlüsselpaar des Secure Element, umfassend einen geheimen Schlüssel SK.SE und einen öffentlichen Schlüssel PK.SE des Secure Element. Der Verschlüsselungsschlüssel wird hierbei wahlweise jeweils, bei MCU und Secure Element, mit dem eigenen geheimen Schlüssel und dem öffentlichen Schlüssel des Partners berechnet.

Die Secure Channel Assets umfassen wahlweise weiter Root Assets, um die Vertrauenswürdigkeit beteiligter öffentlicher Schlüssel sicherzustellen. Die Roots Assets beruhen auf einem asymmetrischenn Schlüsselpaar einer vertrauenswürdigen Instanz. Als vertrauenswürdige Instanz ist beispielsweise ein Herausgebers (insbesondere ein Hersteller-Herausgeber oder alternativ ein einem Nur-Hersteller nachgeschalteter Nur-Herausgeber) der Microcontroller-Anordnung vorgesehen. Das Schlüsselpaar umfasst einen geheimen Schlüssel SK.Root und einen öffentlichen Schlüssel PK.Root. Die Root Assets stehen der Microcontroller-Anordnung zur Verfügung, indem sie folgendes umfassen: einen in der MCU, für den Ressource-Manager RM zugänglich abgespeicherten öffentlichen Schlüssel PK.Root der vertrauenswürdigen Instanz; sowie ein im Secure Element abgespeichertes Zertifikat Cert.SE. Das Zertifikat umfasst zumindest eine unter Verwendung des privaten Schlüssels des Secure Element und des öffentlichen Schlüssels der vertrauenswürdigen Instanz gebildete Signatur, und vorzugsweise zusätzlich den öffentlichen Schlüssel des Secure Element. Falls der öffentliche Schlüssel des Secure Element nicht im Zertifikat enthalten ist, muss er bedarfsweise gesondert vorgesehen sein und mit dem Zertifikat zusammen versandt werden.

Die erfindungsgemäße Umsetzung soll auch das Konzept umfassen, bei der die Schlüssel bei der initialen Inbetriebnahme ausgetauscht werden, auch ohne besondere Absicherung. Bei dem als TOFU ("Trust on First Usage") bekannten Verfahren erfolgt der Schlüsselaustausch nur ein einziges Mal.

Wahlweise umfasst die Microcontroller-Anordnung weiter ein Gehäuse, wobei der Chip und der Sekundär-Chip innerhalb ein und desselben Gehäuses angeordnet sind. Das Secure Element ist also bevorzugt im selben SiP Package (Gehäuse) angeordnet wie die MCU. Das Secure Element und die MCU sind dabei intern im Gehäuse miteinander elektrisch verbunden, z.B. durch Bonddrahtverbindungen, Flipchip-Verbindungen oder sonstige an sich bekannte Bondverfahren zum elektrischen Verbinden zweier einzelner Chips.

Die Erfindung in dieser Ausgestaltung ermöglicht ein technisches Verfahren zur sicheren Administration von Ressourcen in einer Micro-Controller Unit MCU durch ein auf einem separaten Chip vorgesehenes sicheres Element SE, das im gleichen Gehäuse wie der Controller-Chip MCU untergebracht ist.

Wahlweise umfasst die Microcontroller-Anordnung weiter einen in der MCU implementierten Software-Agenten, der als Software, insbesondere als eine Betriebssystemfunktionalität eines Betriebssystems der MCU oder als eine auf der MCU implementierte Applikation gestaltet ist, oder als Kombination von Betriebssystemfunktionalität und Applikation. Der Software-Agent ist dazu eingerichtet, die Kommunikation zwischen dem Ressource-Manager der MCU und dem Secure Element auf Software-Ebene, insbesondere auf Betriebssystem-Ebene oder/und Applikations-Ebene, zu unterstützen. Wahlweise arbeitet der Software-Agent mit einer im Secure Element vorhandenen Konfigurations-Applikation zusammen (vergleiche nachfolgende Ausführungen).

Die Microcontroller-Anordnung umfasst wahlweise weiter eine im Secure Element implementierte sichere Konfigurations-Applikation, durch die die Konfigurierungs-Funktionalitätenzum Konfigurieren von Ressource-Komponenten der MCU implementiert sind.

Die Speicherung der Identitäten und Prüfung der Autorisierung im Zusammenhang mit der Konfigurierung von Ressource-Komponenten erfolgt im Secure Element, z.B. unter Steuerung der Konfigurierungs-Applikation. Der MCU-Chip selbst stellt in Gestalt des Ressource-Mangers, ggf. mit Software-Unterstützung des Software-Agenten, eine abgesicherte Schnittstelle zur Steuerung seiner internen Ressource-Komponenten bereit.

Wahlweise umfasst der Ressource-Manager ein - vorzugsweise flüchtiges - Register, das eingerichtet ist, den Konfigurierurigs-String (feature enable pattern) zu empfangen, wobei die Möglichkeit schreibenden Zugriffs auf das Register ausschließlich das Secure Element hat. Die Ausschließlichkeit (Exklusivität) der Möglichkeit schreibenden Zugriffs wird erreicht, indem zwischen Secure Element und MCU Assets (Schlüssel) für einen Secure Channel vereinbart sind und bewirkt. Das Register und der Ressource-Manager bilden zusammen eine Ausführungsform einer Trusted Hardware.

Bei einem Verfahren zur Provisionierung unter Nutzung eines solchen Registers sendet ein externer Server, z.B. ein Trusted Service Manager TSM, den Konfigurierungs-String (feature enable pattern) über das Secure Element an das Register. Die MCU setzt den Registerinhalt, d.h. den Konfigurierungs-String (feature enable pattern) direkt in eine Konfigurierung der MCU um, z.B. in Aktivierung bestimmter Ressource-Komponenten, wie sie durch den Konfigurierungs-String (feature enable pattern) definiert sind. Vorzugsweise ist das Register flüchtig, so dass sein Inhalt nach einem Herunterfahren der MCU automatisch geleert ist. Hierdurch ist sichergestellt, dass nur zur Laufzeit der MCU Registerinhalte vorhanden sind, durch die sich die Konfiguration der MCU beeinflussen lässt.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: eine Microcontroller-Anordnung mit einer MCU, auf einem ersten Chip und einem Secure Element eSE auf einem zweiten Chip, nach einer Ausführungsform der Erfindung;
- Fig.2: eine Detailansicht eines Geräts mit einer Microcontroller-Anordnung wie der aus Fig. 1, mit Detail-Darstellung von Hardware- und Software-Bestandteilen der Microcontroller-Anordnung;
- Fig. 3: ein Ablaufschema zum Aufbau eines Secure Channel in einer Microcontroller-Anordnung wie der in Fig. 1, 2 gezeigten, initiiert durch das Secure Element, mit Diffie-Hellman-Schlüsselableitung;
- Fig. 4: ein Ablaufschema zum Aufbau eines Secure Channel in einer Microcontroller-Anordnung wie der in Fig. 1, 2 gezeigten, initiiert durch den Ressource Manager, mit Diffie-Hellman-Schlüsselableitung;
- Fig. 5: ein Ablaufschema zum Aufbau eines Secure Channel in einer Microcontroller-Anordnung wie der in Fig. 1, 2 gezeigten, mit direktem Schlüsselaustausch.

### Detaillierte Beschreibung von Ausführungsbeispielen

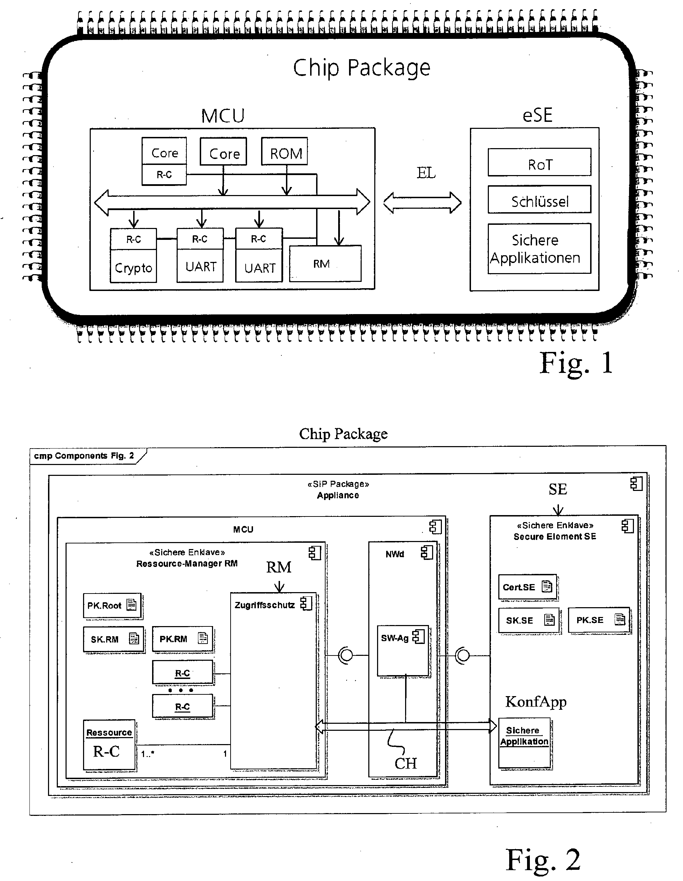

Fig. 1 zeigt eine erfindungsgemäße Microcontroller-Anordnung mit einer MCU, die auf einem ersten Chip angeordnet ist, und einem Secure Element eSE, das auf einem Sekundär-Chip genannten zweiten Chip angeordnet ist. Die beiden Chips von MCU und Secure Element SE sind in einem einzigen Chip Package angeordnet und miteinander elektrisch verbunden (EL), z.B. über Bonddraht- oder Flip-Chip-Verbindung oder dergleichen.

Ein erster Corel und ein ROM-Speicher sind nicht konfigurierbare Ressource-Komponenten (fehlendes Kästchen R-C). Ein zweiter Core2, ein Krypto-Coprozessor Crypto und eine Schnittstelle UART (es kann weitere Schnittstellen geben, z.B. zwei oder mehr UART) sind konfigurierbare Ressource-Komponenten R-C. Die Ressource-Komponenten insgesamt stellen die verfügbaren der Ressourcen der MCU dar.

Die MCU enthält weiter einen Ressource-Manager RM, der eine Schnittstelle zur Steuerung der Ressourcen anbietet. Diese Schnittstelle soll jedoch nur für die autorisierte Komponente, d.h. das Secure Element SE, verfügbar sein. Der Ressource-Manager RM ist als Hardware-Komponente ausgeführt und gilt als vertrauenswürdig und wird daher auch als trusted Hardware bezeichnet.

Das Secure Element enthält Schlüssel für die sichere Kommunikation mit der MCU, einen Root of Trust RoT, der z.B. durch ein Zertifikat Cert.SE einer basierend auf dem privaten Schlüssels (SK.Root) einer vertrauenswürdigen Instanz wie des Issuers basiert (Details vgl. Fig. 2), und eine (oder mehrere) sichere Applikation(en).

Das in der Microcontroller-Anordnung eingerichtete sichere Verfahren zum Schalten beruht auf einer Vertrauensbeziehung zwischen dem Secure Element (e)SE und der Ressource-Manager Komponente RM auf dem MCU-Chip. Damit der Ressource-Manager RM und das Secure Element SE eine Vertrauens-Beziehung eingehen, müssen sie vorher in einer Schlüsselableitungs-Phase eine sichere Kommunikationsverbindung aufbauen, den Secure Channel CH. Technisch können die Komponenten in dieser Schlüsselableitungs-Phase die Schlüssel austauschen oder vereinbaren, durch die die Kommunikation zwischen dem SE und dem RM abgesichert werden kann. Die Schlüsselableitungs-Phase kann entweder immer möglich sein oder an bestimmte Betriebszustände gebunden sein, z.B. an eine Boot-Phase. Beispielsweise kann also die Schlüsselableitungs-Phase nur in der Boot-Phase möglich sein, in welcher die MCU gebootet wird.

Die Vertrauensbeziehung zwischen dem Ressource-Manager RM und dem Secure Element SE kann temporär sein oder unbegrenzt gelten.

Konkret wird damit die Steuerung, insbesondere Konfigurierung, von Komponenten der MCU durch ein Secure Element ermöglicht, wobei die gesteuerten Komponenten nicht Bestandteil der sicheren Enklave des Secure Element sind.

Insbesondere wird eine Ausführungsform angegeben, wobei die Ressourcen Chip-Hardware-Komponenten (Peripherie-Komponenten, z.B. Cores und Schnittstellen wie UART) sind, die durch den Ressourcen Manager RM - der ebenfalls in Hardware ausgeführt ist - gesteuert werden, wobei die administrative Logik, mit der die Funktionalität zum Schalten von Konfigurationen der Ressourcen R-C durch eine gesicherte Applikation KonfApp im Secure Element SE erbracht wird.

Der Ressource-Manager RM bietet eine Schnittstelle, über die die internen Komponenten der MCU gesteuert werden können. Gleichzeitig realisiert der Ressource-Manager Zugriffsschutz, indem er diese Schnittstelle nur für Klienten freigibt, mit denen eine Vertrauensbeziehung besteht. Der einzige solche Klient ist das Secure Element.

### Detaillierte Beschreibung von Einzel-Komponenten

Die Lösung wird realisiert durch das Zusammenwirken der folgenden Komponenten:
- **Ressource-Manager (RM):** Eine sichere Umgebung oder sichere Enklave oder Trusted Enclave TE zur Kapselung und Verwaltung von kritischen internen MCU Ressourcen-Komponenten R-C. Der Ressource-Manager RM ist in (trusted) Hardware realisiert. Der RM bietet eine Schnittstelle, um auf die von dieser Komponente verwalteten Ressourcen R-C zugreifen zu können. Konkret kann der Ressource-Manager Konfigurierungs-Strings (feature enable patterns) entgegennehmen, durch die die Steuerung/Konfigurierung der gekapselten Ressourcen erfolgt. Unter Steuerung von Ressourcen ist hier z.B. die Konfiguration mit bestimmten Parametern oder das generelle ein/ ausschalten oder aktivieren/ deaktivieren oder freischalten/ sperren zu verstehen.
- **Secure-Element (SE):** eine sichere Umgebung mit Logik zur kryptographischen Absicherung der Steuerung/ Konfigurierung und Administration von Ressourcen R-C des MCU (d.h. nicht der SE-eigenen Ressourcen).
- **Ressource (feature):** Die kontrollierte Ressource, die exklusiv durch den Ressource-Manager RM verwaltet wird. Dies können spezielle Hardware-Komponenten, Daten, Hardware-Register, Freischaltungen, Funktionalitäten, oder ganz allgemein kritische Komponenten sein. Insbesondere kann eine Ressource auch eine kundenspezifische Funktionserweiterung sein, die nur auf MCUs für diesen Kunden freigeschaltet werden darf.
- **NWd oder "Normal World":** die normale Umgebung, von der keine Sicherheitsanforderungen erwartet werden. Über diese Komponente wird die physische Kommunikation zwischen den anderen Komponenten realisiert. Die NWd kann auch einen Software-Agenten umfassen, der die Kommunikation zwischen SE und RM unterstützt.

Fig. 2 zeigt ein eine Detailansicht eines Geräts ("Appliance") mit einer Microcontroller-Anordnung wie der aus Fig. 1, mit Detail-Darstellung von Hardware- und Software-Bestandteilen der Microcontroller-Anordnung. Die Microcontroller-Anordnung ist als Chip Package mit einem ersten Chip für die MCU und einem zweiten Chip für das Secure Element SE gestaltet.

Die MCU umfasst einen Ressource-Manager RM und mehrere durch den Ressource-Manager RM konfigurierbare Ressource-Komponenten R-C. Unter Verfügbarkeit des Ressource-Managers RM sind zudem folgende MCUseitige Secure Channel Assets: ein öffentlicher Schlüssel PK.Root des Herstellers und Herausgebers der Microcontroller-Anordnung, sowie der geheime Schlüssel SK.RM und der öffentliche Schlüssel PK.RM des Ressource-Managers RM gespeichert. Die genannten Secure Channel Assets (Schlüssel PK.Root, PK.RM, SK.RM) sind für den Ressource-Manager RM zugänglich, nicht aber für andere Instanzen. Konfigurierungs-Befugnis gegenüber den konfigurierbaren Ressource-Komponenten R-C besteht für den Ressource-Manager RM, nicht aber für andere Instanzen. Insofern liegen der Ressource-Manager RM, die Konfigurierungs-Befugnis des Ressource-Manager RM gegenüber den konfigurierbaren Ressource-Komponenten R-C und die Secure Channel Assets (Schlüssel öffentlicher Schlüssel PK.Root des Herstellers und Herausgebers (Issuer) der Microcontroller-Anordnung, sowie der geheime Schlüssel SK.RM und der öffentliche Schlüssel PK.RM des Ressource-Managers RM) in einer sicheren Enklave oder "Controler-TE" der MCU, die unter Steuerungs-Hoheit des Ressource-Managers RM steht.

Auf der MCU ist weiter eine unsichere, normale Ausführungsumgebung oder Normal World NWd vorhanden, die nicht durch das Secure Element SE und den Secure Channel CH gesichert ist. Physisch verläuft der Secure Channel CH durch diese Normal World NWd.

Das Secure Element SE umfasst eine Konfigurierungs-Applikation KonfApp und folgende Secure-Element-seitigen Secure Channel Assets: einen öffentlichen Schlüssel PK.SE und einen geheimen Schlüssel SK.SE des Secure Element SE, sowie ein Zertifikat Cert.SE, umfassend eine Signatur und den öffentlichen Schlüssel PK.SE des Secure Element SE. Die Signatur ist gebildet durch Signieren des privaten (Root-)Schlüssels SK.Root des Herausgebers und Herstellers mit dem Secure Element eigenen geheimen (privaten) Schlüssel SK.SE. Die Signatur wird außerhalb der Micro-Controller-Anordnung (Chip-Package) in einer Produktionsumgebung des Herstellers erzeugt und noch in der Produktion in das Secure Element SE programmiert. Das Secure Element SE bildet eine zweite sichere Enklave, neben der sicheren Enklave, die in der MCU unter dem Ressource Manager RM gebildet ist.

Die Vertrauensbeziehung zwischen Ressource Manager RM und Secure Element SE wird durch einen Secure Channel CH repräsentiert. Der Aufbau des Secure Channel gelingt nur, wenn beide, Ressource Manager RM und Secure Element SE, einen gemeinsamen Schlüssel K für die Verschlüsselung besitzen und sich gegenseitig authentisieren können.

Nachdem der Secure Channel CH eingerichtet ist, kann das Secure Element SE Nachrichten an den Ressource Manager RM senden. Die Nachrichten können über die Normal World NWd gesendet werden. Die Vertraulichkeit und Integrität der Daten wird durch den "Secure Channel" CH gesichert.

Der Ressource Manager RM soll die folgenden Schlüssel als Voraussetzung (d.h. Pre-Issued, also vor Herausgabe der Chip Package ins Feld) beinhalten:

| Name | Typ | Beschreibung |
|---|---|---|
| PK.Root | Öffentlicher Schlüssel | Der öffentliche Schlüssel des Issuers der MCU eigenen sicheren Enklave/ Controller-TE. Dieser Schlüssel kann in der Enklave / TE selbst liegen, oder z.B. im ROM-Bereich der Appliance (Gerät), der dem Ressource Manager RM zugänglich ist. Es muss sichergestellt sein, dass der PK.Root nicht ausgetauscht werden kann. |
| SK.RM | Privater Schlüssel | Der private Teil des Schlüsselpaars spezifisch für den RM. Das Schlüsselpaar kann zum Beispiel durch eine PUF (Physical uncloneable Function), durch "Fuses" oder |
| | | durch Key-Injection bei der Produktion erzeugt werden. |
| PK.RM | Öffentlicher Schlüssel | Der öffentliche Teil des Schlüsselpaars spezifisch für den Ressource Manager. |

Das SE soll die folgenden Schlüssel als Voraussetzung (d.h. Pre-Issued, also vor Herausgabe der Chip Package ins Feld) beinhalten:

| Name | Type | Beschreibung |
|---|---|---|
| SK.SE | Privater Schlüssel | Der private Teil des Schlüsselpaars spezifisch für das SE. Das Schlüsselpaar wird durch den Issuer generiert und in das SE eingebracht. |
| PK.SE | Öffentlicher Schlüssel | Der öffentliche Teil des Schlüsselpaars spezifisch für das SE. |
| Cert.SE | Zertifikat | Das Zertifikat enthält den öffentlichen Schlüssel PK.SE und die Signatur. Die Signatur wird mittels des privaten Schlüssels (SK.Root) des Issuers des Secure Elements erzeugt. |

Der Aufbau des Secure Channel CH kann sowohl durch den Ressource Manager RM als auch durch das Secure Element SE initiiert werden.

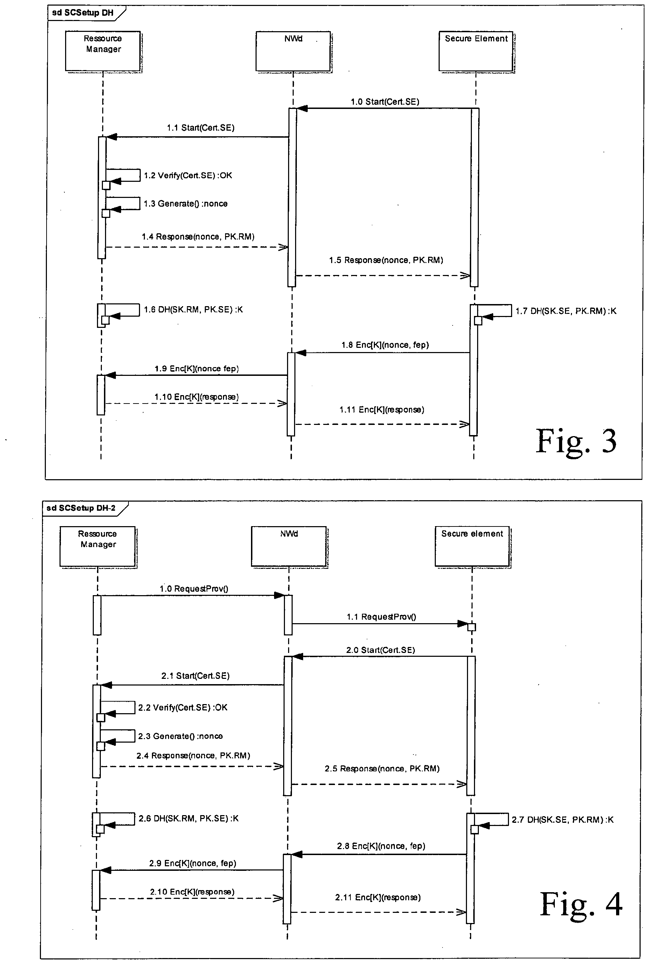

Der Aufbau des Secure Channels CH vom Secure Element SE aus folgt dem in Fig. 3 dargestellten Ablauf.
0.0: (nicht dargestellt): ein Trusted Service Manager sendet einen Konfigurierungs-String "feature enable pattern" fep an das Secure Element SE.
1.0: Das Secure Element SE sendet den initialen Request an die NWd. Diese Nachricht beinhaltet ein Zertifikat Cert.SE. Die wesentlichen Komponenten des Zertifikats Cert.SE sind der öffentliche Schlüssel PK.SE des Secure Element SE und eine Signatur. Die Signatur ist mit dem privaten Schlüssel (SK.Root) des Issuers der Microcontroller-Anordnung und genauer MCUeigenen der Controller-TE (sichere Enklave im MCU) erzeugt. Das Zertifikat Cert.SE ist pre-issued im Ressource Manager RM gespeichert. Der private Schlüssel SK.Root ist in dieser Phase nicht im System und wurde nur in der Produktionsphase der Microcontroller-Anordnung verwendet.
1.1: Die NWd gibt den Request weiter an den Ressource Manager RM. In der bevorzugten Ausführungsform beinhaltet die NWd einen Software-Agenten SW-Ag, der die Daten von dem Secure Element SE entgegennimmt und an den Ressource Manager RM, der in Hardware realisiert sein kann, weitergibt. Grundsätzlich verändert die NWd den Request nicht.
1.2: Der Ressource-Manager RM prüft das Zertifikat Cert.SE. Zur Prüfung verwendet der RM den öffentlichen Schlüssel PK.Root, der ebenfalls pre-issued ist und während der Produktion in die MCU programmiert worden ist. Der öffentliche Schlüssel PK.Root kann im Ressource Manager RM selbst liegen oder aber im ROM Bereich der Appliance, auf den der Ressource-Manager RM Zugriff hat. Der öffentliche Root-Schlüssel PK.Root ist nicht vertraulich, es muss lediglich sichergestellt werden, dass der Schlüssel PK.Root nicht durch einen Angreifer ausgetauscht werden kann.
1.3: Die Ressource-Manager RM generiert eine Nonce (z.B. eine Zufallszahl). Dieser Schritt ist optional; damit wird ein Schutz gegen Replay-Angriffe realisiert.
1.4: Der Ressource-Manager gibt eine Nachricht mit der Nonce (optional) und dem öffentlichen Teil PK.RM des RM-eigenen Schlüsselpaars an die NWd. Der zugehörige private Schlüssel SK.RM ist im Ressource-Manager RM und verlässt nie den RM.
1.5: Die NWd reicht die Antwort an das Secure Element SE weiter.
1.6: Der Ressource-Manager RM führt eine Diffie-Hellmann Ableitung durch. In die Ableitung gehen der private Schlüssel des Ressource-Managers SK.RM und der öffentliche Schlüssel PK.SE des Secure Elements SE ein. Das Ergebnis der Diffie-Hellmann Operation ist der symmetrische Schlüssel K.
1.7: Das Secure Element SE führt eine Diffie-Hellmann Ableitung durch. In die Ableitung gehen der private Schlüssel des Secure Elements SK.SE und der öffentliche Schlüssel PK.RM der Ressource-Managers PK.RM ein. Das Ergebnis der Diffie-Hellmann Operation ist ebenfalls der symmetrische Schlüssel K.
1.8: Das Secure Element SE inkrementiert die Nonce. Das Secure Element SE sendet eine Nachricht mit dem feature enable pattern fep und die Nonce. Der Inhalt des feature enable pattern fep sind Konfigurations-Anweisungen, um Ressource-Komponenten der MCU zu konfigurieren. Die Nachricht wird mit dem symmetrischen Schlüssel K verschlüsselt und geht an die NWd.
1.9: Die NWd gibt die Nachricht weiter an den Ressource-Manager RM.
1.10: Der Ressource-Manager EM entschlüsselt die Nachricht, prüft die Nonce und führt das feature enable pattern fep aus. Die Ergebnisse der Ausführung des feature enable pattern fep werden in eine an das Secure Element SE zu sendende Response-Nachricht oder Antwort-Nachricht aufgenommen. Die Nonce wird inkrementiert und ebenfalls in die Antwort-Nachricht übernommen. Die verschlüsselte Antwort-Nachricht wird mit dem symmetrischen Schlüssel K verschlüsselt. Danach wird sie der NWd übergeben.
1.11: Die NWd leitet die Antwort-Nachricht an die Controller-TE weiter.

Als Variante, und wie in Fig. 4 dargestellt, kann auch die Ressource-Manager RM seitige sichere Enklave MCU-TE (RM-TE) die Interaktion eröffnen. In diesem Fall:
1.0+1.1: sendet der Ressource Manager RM einen Request / eine Notifikation als erste Nachricht über die Normal World NWd an die Secure Element SE seitige sichere Enklave TE.
2.0+2.1: das Secure Element SE sendet das Zertifikat Cert.SE über die Normal World NWd an den Ressource Manager RM.
Die Schritte 2.2-2.11 verlaufen analog wie die Schritte 1.2-1.11 aus Fig. 3, mit Verifizierung des Zertifikats Cert.SE und Diffie-Hellman-Ableitung des symmetrischen Schlüssel K auf beiden Seiten Secure Element SE und MCU, und nachfolgender verschlüsselter Übertragung von Kommandos zur Konfigurierung von MCU-Komponenten.

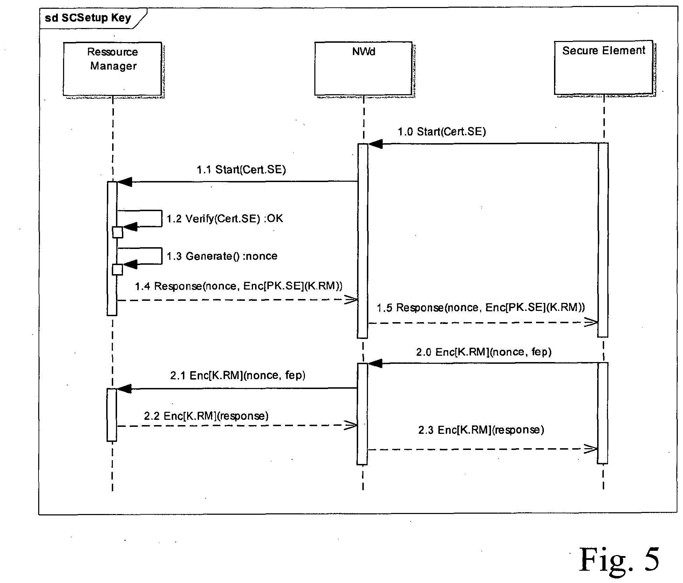

Als weitere Variante, und wie in Fig. 5 gezeigt, kann der Ressource Manager RM (= die Ressource-TE) auch direkt einen symmetrischen Schlüssel K übertragen. Diese Variante kann zum Einsatz kommen wenn die MCU bzw. der Ressource Manager RM keine Diffie-Hellman Schlüsselableitung ausführen kann, wie dies z.B. bei niedrigpreisigen Microcontrollern der Fall sein kann.
1.0+1.1: Das Secure Element SE sendet über die Normal World NWd das Zertifikat Cert.SE an den Ressource-Manager RM.
1.2: Der Ressource Manager RM verifiziert das Zertifikat Cert.SE, extrahiert den öffentlichen Schlüssel PK.SE des Secure Element SE aus dem Zertifikat Cert.SE, legt selbst einen symmetrischen Schlüssel K = K.RM fest und verschlüsselt den festgelegten symmetrischen Schlüssel K.RM mit dem extrahierten öffentlichen Schlüssel PK.SE des Secure Element SE zu einem Chiffrat Enc[Pk.SE](K.RM).
1.3: Der Ressource Manager RM generiert eine Nonce.
1.4+1.5: Der Response Manager erzeugt eine Response-Nachricht umfassend den Nonce und das Chiffrat Enc[PK.SE](K.RM) und sendet die Response-Nachricht über die Normal World NWd an das Secure Element SE.

Das Secure Element SE entschlüsselt das Chiffrat Enc[PK.SE](K.RM) mit dem eigenen privaten (geheimen) Schlüssel SK.SE und erhält dadurch den durch den Ressource Manager RM festgelegten symmetrischen Schlüssel K.RM.
2.0+2.1: Das Secure Element sendet einen von einem Trusted Service Manager TSM empfangenen Konfigurierungs-String "feature enable pattern" fep zur Konfigurierung von MCU-Komponenten R-C, verschlüsselt mit dem entschlüsselten symmetrischen Schlüssel K.RM den Nonce und das feature enable pattern fep zu einem zweiten Chiffrat Enc[K.RM](Nonce, List<fep>) und sendet es über die Normal World NWd an den Ressource Manager der MCU.
2.2+2.3: Der Ressource Manager RM entschlüsselt das zweite Chiffrat, führt das feature enable pattern fep aus, erzeugt eine Antwort-Nachricht mit einer Liste von Antworten List<Response> für das Secure Element SE, verschlüsselt die Antworten-Liste List<Response> mit dem symmetrischen Schlüssel K.RM zu einem dritten Chiffrat Enc[K.RM](List<Response>) und sendet das dritte Chiffrat an das Secure Element SE.

Das initial genutzte Zertifikat Cert.SE kann eine sehr vereinfachte Struktur haben. Wichtig ist nur, dass der öffentliche Schlüssel des Secure Elements SE (PK.SE) durch die mit SK.Root gebildete Signatur durch den Issuer des Secure Elements beglaubigt ist. Das Zertifikat kann selbstverständlich auch nach X.509 gebildet sein, aber dies ist keine Voraussetzung.

Grundlegend für die Sicherheit ist, dass die NWd Komponente von sich aus nicht die Schnittstelle des Ressource Managers RM bedienen kann, obwohl sie technisch Zugriff auf den Ressource Manager RM hat. Der NWd fehlt dazu das Schlüsselpaar des Ressource Managers RM, dessen öffentlicher Teil durch SK.Root gesichert ist.

Secure Elements beglaubigt ist. Das Zertifikat kann selbstverständlich auch nach X.509 gebildet sein, aber dies ist keine Voraussetzung.

Grundlegend für die Sicherheit ist, dass die NWd Komponente von sich aus nicht die Schnittstelle des Ressource Managers RM bedienen kann, obwohl sie technisch Zugriff auf den Ressource Manager RM hat. Der NWd fehlt dazu das Schlüsselpaar des Ressource Managers RM, dessen öffentlicher Teil durch SK.Root gesichert ist.

Die NWd kann jedoch den Nachrichtentransport stören und so verhindern, dass das Secure Element SE die Ressourcen in der vom Ressource Manager RM verwalteten Domäne konfiguriert. Das Verfahren geht jedoch zum einen von einer kooperativen NWd aus. Zum anderen wird bedarfsweise, falls ein Angriff auf die Microcontroller-Anordnung entdeckt oder vermutet wird, wahlweise die Durchführung einer Konfiguration von Ressource-Komponenten (z.B. Freigabe oder Aktivierung einer Ressource-Komponente) verhindert oder abgebrochen.

### Zitierter Stand der Technik

[1] EP 2797294 A1
[2] US 2015074815 A1
[3] US 6853983 B1
[4] US 2014/256251 A1
[5] US 2014/089113 A1
[6] US 2004/250066 A1
[7] US 7 389 415 B1

## Patentansprüche

1. Microcontroller-Anordnung umfassend:
- einen Chip mit einer darauf als integrierte Schaltung vorgesehenen Microcontroller-Unit MCU, die MCU umfassend:
-- ein oder mehrere Ressource-Komponenten (R-C), die jeweils eine Konfiguration haben, die jeweils zwischen zumindest zwei unterschiedlichen möglichen Konfigurationen schaltbar ist; und
-- einen Ressource-Manager (RM), der eingerichtet ist, einen Konfigurierungs-String (fep) zu empfangen und die ein oder mehreren Ressource-Komponenten in eine dem Konfigurierungs-String entsprechende Konfiguration zu schalten;
- einen von der Microcontroller-Anordnung weiter umfassten, mit dem Chip elektrisch gekoppelten Sekundär-Chip mit einem darauf als integrierte Schaltung vorgesehenen Secure Element (SE);
- eine Secure Channel Infrastruktur, eingerichtet zum Betreiben eines Secure Channel (CH) zwischen dem Ressource-Manager (RM) und dem Secure Element (SE), so dass der Ressource-Manager (RM) unter exklusiver Steuerung des Secure Element (SE) steht, **dadurch gekennzeichnet, dass:**
der Ressource-Manager (RM) ein Register umfasst, das eingerichtet ist, den Konfigurierungs-String (fep) zu empfangen, wobei die Möglichkeit schreibenden Zugriffs auf das Register ausschließlich das Secure Element (SE) hat.

2. Microcontroller-Anordnung nach Anspruch 1, wobei als Ressource-Komponenten einige der folgenden Hardware-Komponente vorgesehen sind: ein Prozessorkern (Core); ein Coprozessor, insbesondere ein Krypto-Coprozessor (Crypto); ein Schnittstellen-Element (UART); ein Speicher-Element (ROM, EEPROM, Flash, RAM), insbesondere nichtflüchtiges ROM, EEPROM, Flash) oder flüchtiges (RAM) Speicher-Element; ein Register; Hardware-Unterstützung für Betriebssystem oder Anwendungsfunktionen.

3. Microcontroller-Anordnung nach Anspruch 2, wobei als Ressource-Komponente eine durch eine Hardware-Komponente bereitgestellte Funktionalität vorgesehen ist, insbesondere eine der folgenden Funktionalitäten: ein auf einem Prozessorkern oder Coprozessor ausführbares Kommando; ein auf einem Coprozessor ausführbarer kryptographischer Algorithmus.

4. Microcontroller-Anordnung nach einem der Ansprüche 1 bis 3, wobei als Konfiguration der Ressource-Komponente (R-C) eines der folgenden oder eine Kombination mehrerer der folgenden vorgesehen ist: ein AktivierungsZustand, insbesondere aktiviert oder deaktiviert; ein Wert eines Parameters oder eine Parameter-Konfiguration einer Mehrzahl von Parametern; ein Personalisierungszustand, insbesondere personalisiert oder nicht-personalisiert; ein Funktionsumfang, insbesondere ein Funktionsumfang umfassend ausgewählte Funktionalitäten einer Hardware-Komponente; ein Freischaltungs-Zustand, insbesondere freigeschalten oder gesperrt; jeweils der Ressource-Komponente.

5. Microcontroller-Anordnung nach einem der Ansprüche 1 bis 4, wobei der Secure Channel (CH) eingerichtet ist, Kommunikation zwischen dem Ressource-Manager (RM) der MCU und dem Secure Element (SE) verschlüsselt mit einem zwischen dem Ressource-Manager (RM) der MCU und dem Secure Element (SE) vereinbarten symmetrischen Verschlüsselungsschlüssel (K) durchzuführen.

6. Microcontroller-Anordnung nach einem der Ansprüche 1 bis 5, wobei die Secure Channel (CH) Infrastruktur Secure Channel Assets umfasst,
- wobei die Secure Channel Assets dazu eingerichtet sind, den symmetrischen Verschlüsselungsschlüssel (K) zwischen dem Ressource-Manager (RM) und dem Secure Element (SE) zu vereinbaren, insbesondere entweder durch direkten Austausch des Verschlüsselungsschlüssels (K) oder durch ein Schlüsselvereinbarungs-Protokoll, insbesondere Diffie-Hellman-Schlüsselvereinbarungs-Protokoll, und
- wobei die Secure Channel Assets umfassen:
--- ein in der MCU gespeichertes asymmetrisches Schlüsselpaar des Ressource Managers (RM), umfassend einen geheimen Schlüssel (SK.RM) und einen öffentlichen Schlüssel (PK.RM) des Ressource Managers (RM); und
--- ein im Secure Element (SE) gespeichertes asymmetrisches Schlüsselpaar des Secure Element, umfassend einen geheimen Schlüssel (SK.SE) und einen öffentlichen Schlüssel (PK.SE) des Secure Element (SE).

7. Microcontroller-Anordnung nach Anspruch 6, wobei die Secure Channel Assets weiter Root Assets umfassen, die auf einem asymmetrischenn Schlüsselpaar einer vertrauenswürdigen Instanz, insbesondere eines Herausgebers der Microcontroller-Anordnung, beruhen, das einen geheimen Schlüssel (SK.Root) und einen öffentlichen Schlüssel (PK.Root) umfasst, wobei die Root Assets in der Microcontroller-Anordnung zur Verfügung stehen, indem sie umfassen:
- den in der MCU, für den Ressource-Manager (RM) zugänglich, abgespeicherten öffentlichen Schlüssel (PK.Root) der vertrauenswürdigen Instanz;
- ein im Secure Element abgespeichertes Zertifikat (Cert.SE), das zumindest eine unter Verwendung des privaten Schlüssels (PK.SE) des Secure Element (SE) und des öffentlichen Schlüssels (PK.Root) der vertrauenswürdigen Instanz gebildete Signatur umfasst und vorzugsweise zusätzlich den öffentlichen Schlüssel (SK.SE) des Secure Element (SE).

8. Microcontroller-Anordnung nach einem der Ansprüche 1 bis 7, weiter umfassend ein Gehäuse, wobei der Chip und der Sekundär-Chip innerhalb des Gehäuses angeordnet sind.

9. Microcontroller-Anordnung nach einem der Ansprüche 1 bis 8, weiter umfassend einen in der MCU implementierten Software-Agenten (SW-Ag), der als Software, insbesondere als eine Betriebssystemfunktionalität eines Betriebssystems der MCU oder/und als eine auf der MCU implementierte Applikation gestaltet ist, und der dazu eingerichtet ist, die Kommunikation zwischen dem Ressource-Manager (RM) der MCU und dem Secure Element (SE) auf Software-Ebene, insbesondere auf Betriebssystem-Ebene oder/und Applikations-Ebene, zu unterstützen.

10. Microcontroller-Anordnung nach einem der Ansprüche 1 bis 9, weiter umfassend eine im Secure Element implementierte sichere Konfigurations-Applikation (KonfApp), durch welche die Konfigurierungs-Funktionalitäten zum Konfigurieren von Ressource-Komponenten (R-C) der MCU implementiert sind.

11. Microcontroller-Anordnung nach einem der Ansprüche 1 bis 10, wobei das vom Ressource-Manager (RM) umfasste Register ein flüchtiges Register ist.

## Claims

1. A microcontroller arrangement comprising:
- a chip having a microcontroller unit MCU provided thereon as an integrated circuit, the MCU comprising:
-- one or several resource components (R-C) which respectively have a configuration which respectively is switchable between at least two different possible configurations; and
-- a resource manager (RM) which is devised to receive a configuration string (fep) and to switch the one or several resource components in a configuration corresponding to the configuration string;
- a secondary chip, further comprised by the microcontroller arrangement and electrically coupled to the chip, having a secure element (SE) provided thereon as an integrated circuit;
- a secure channel infrastructure, devised for operating a secure channel (CH) between the resource manager (RM) and the secure element (SE), so that the resource manager (RM) is under exclusive control of the secure element (SE), **characterized in that:**
the resource manager (RM) comprises a register which is devised to receive the configuration string (fep), wherein only the secure element (SE) has the possibility of writing access to the register.

2. The microcontroller arrangement according to claim 1, wherein as resource components some of the following hardware components are provided: a processor core (Core); a coprocessor, in particular a crypto coprocessor (Crypto); an interface element (UART); a storage element (ROM, EEPROM, Flash, RAM), in particular non-volatile (ROM, EEPROM, Flash) or volatile (RAM) storage element; a register; hardware support for operating system or application functions.

3. The microcontroller arrangement according to claim 2, wherein a functionality supplied by a hardware component is provided as a resource component, in particular one of the following functionalities: a command executable on a processor core or coprocessor; a cryptographic algorithm executable on a coprocessor.

4. The microcontroller arrangement according to any of claims 1 to 3, wherein as a configuration of the resource component (R-C) one of the following or a combination of several of the following is provided: an activation state, in particular activated or deactivated; a value of a parameter or a parameter configuration of a multiplicity of parameters; a personalization state, in particular personalized or non-personalized; a range of functions, in particular a range of functions comprising selected functionalities of a hardware component; an activation state, in particular enabled or disabled; respectively of the resource component.

5. The microcontroller arrangement according to any of claims 1 to 4, wherein the secure channel (CH) is devised to carry out communications, encrypted with a symmetric encryption key (K) agreed on between the resource manager (RM) of the MCU and the secure element (SE), between the resource manager (RM) of the MCU and the secure element (SE).

6. The microcontroller arrangement according to any of claims 1 to 5, wherein the secure channel (CH) infrastructure comprises secure channel assets,
- wherein the secure channel assets are devised to agree on the symmetric encryption key (K) between the resource manager (RM) and the secure element (SE), in particular either by direct exchange of the encryption key (K) or by a key-agreement protocol, in particular Diffie-Hellman key-agreement protocol, and
- wherein the secure channel assets comprise:
--- stored in the MCU, an asymmetric key pair of the resource manager (RM), comprising a secret key (SK.RM) and a public key (PK.RM) of the resource manager (RM); and
--- stored in the secure element (SE), an asymmetric key pair of the secure element, comprising a secret key (SK.SE) and a public key (PK.SE) of the secure element (SE).

7. The microcontroller arrangement according to claim 6, wherein the secure channel assets comprise further root assets which are based on an asymmetric key pair of a trustworthy entity, in particular of an issuer of the microcontroller arrangement, which comprises a secret key (SK.Root) and a public key (PK.Root), wherein the root assets are available in the microcontroller arrangement as they comprise:
- stored in the MCU, the public key (PK.Root) of the trustworthy entity, accessible by the resource manager (RM);
- stored in the secure element, a certificate (Cert.SE) which comprises at least one signature formed using the private key (PK.SE) of the secure element (SE) and the public key (PK.Root) of the trustworthy entity and preferably additionally the public key (SK.SE) of the secure element (SE).

8. The microcontroller arrangement according to any of claims 1 to 7, further comprising a housing, wherein the chip and the secondary chip are arranged within the housing.

9. The microcontroller arrangement according to any of claims 1 to 8, further comprising a software agent (SW-Ag) implemented in the MCU, which is designed as software, in particular as an operating system functionality of an operating system of the MCU or/and as an application implemented on the MCU, and which is devised to support the communication between the resource manager (RM) of the MCU and the secure element (SE) at software level, in particular at operating system level or/and application layer.

10. The microcontroller arrangement according to any of claims 1 to 9, further comprising a secure configuration application (KonfApp) implemented in the secure element, by which the configuration functionalities for configuring resource components (R-C) of the MCU are implemented.

11. The microcontroller arrangement according to any of claims 1 to 10, wherein the register comprised in the resource manager (RM) is a volatile register.

## Revendications

1. Agencement de microcontrôleur comprenant :
- une puce dotée d'une unité de microcontrôleur MCU prévue en tant que circuit intégré, la MCU comprenant :
- un ou plusieurs composants de ressources (R-C) qui ont respectivement une configuration qui peut être respectivement commutée entre au moins deux configurations différentes possibles ; et
- un gestionnaire de ressources (RM) conçu pour recevoir une chaîne de configuration (fep) et pour commuter les un ou plusieurs composants de ressources dans une configuration correspondant à la chaîne de configuration ;
- une puce secondaire, comprise en outre dans l'agencement de microcontrôleur, couplée électriquement avec la puce, ayant un élément de sécurité (SE) prévu en tant que circuit intégré ;
- une infrastructure de Secure Channel conçue pour exploiter une Secure Channel (CH) entre le gestionnaire de ressources (RM) et l'élément de sécurité (SE), de telle sorte que le gestionnaire de ressources (RM) est sous la commande exclusive de l'élément de sécurité (SE), **caractérisé en ce que :**
le gestionnaire de ressources (RM) comprend un registre conçu pour recevoir la chaîne de configuration (fep), cependant que seul l'élément de sécurité (SE) a la possibilité d'accès en écriture sur le registre.

2. Agencement de microcontrôleur selon la revendication 1, cependant que, en tant que composants de ressources, quelques uns des composants matériels suivants ont prévus : un cœur de processeur (Core) ; un coprocesseur en particulier un crypto-coprocesseur (Crypto) ; un élément d'interface (UART) ; un élément de mémoire (ROM, EEPROM, Flash, RAM), en particulier élément de mémoire non volatil (ROM, EEPROM, Flash) ou volatil (RAM) ; un registre ; support matériel pour système d'exploitation ou fonctions d'application.

3. Agencement de microcontrôleur selon la revendication 2, cependant que, en tant que composants de ressources, une fonctionnalité mise à disposition par un composant matériel est prévue, en particulier une des fonctionnalités suivantes : un ordre exécutable sur un cœur de processeur ou coprocesseur ; un algorithme cryptographique exécutable sur un coprocesseur.

4. Agencement de microcontrôleur selon une des revendications de 1 à 3, cependant que, en tant que configuration des composants de ressources (R-C), un des suivants ou une combinaison de plusieurs des suivants est prévu :
un état d'activation, en particulier activé ou désactivé ; une valeur d'un paramètre ou une configuration de paramètres d'une pluralité de paramètres ; un état de personnalisation, en particulier personnalisé ou non personnalisé ; une étendue de fonctions, en particulier une étendue de fonctions comprenant des fonctionnalités choisies d'un composant matériel ;
un état de déblocage, en particulier déblocage ou bloqué ; respectivement des composants de ressources.

5. Agencement de microcontrôleur selon une des revendications de 1 à 4, cependant que la Secure Channel (CH) est conçue pour effectuer de la communication entre le gestionnaire de ressources (RM) de la MCU et l'élément de sécurité (SE) de manière chiffrée avec une clé symétrique de chiffrement (K) convenue entre le gestionnaire de ressources (RM) de la MCU et l'élément de sécurité (SE).

6. Agencement de microcontrôleur selon une des revendications de 1 à 5, cependant que la Secure Channel (CH) comprend des Infrastruktur Secure Channel Assets,
- cependant que les Secure Channel Assets sont conçues pour convenir de la clé symétrique de chiffrement (K) entre le gestionnaire de ressources (RM) et l'élément de sécurité (SE), en particulier soit par échange direct de la clé de chiffrement (K), soit par un protocole de convention de clé, en particulier protocole de convention de clé Diffie-Hellman, et
- cependant que les Secure Channel Assets comprennent :
- une paire de clés asymétrique du gestionnaire de ressources (RM) mémorisée dans la MCU, comprenant une clé secrète (SK.RM) et une clé publique (PK.RM) du gestionnaire de ressources (RM) ; et
- une paire de clés asymétrique de l'élément de sécurité mémorisée dans l'élément de sécurité (SE), comprenant une clé secrète (SK.SE) et une clé publique (PK.SE) de l'élément de sécurité (SE).

7. Agencement de microcontrôleur selon la revendication 6, cependant que les Secure Channel Assets comprennent en outre des Root Assets qui reposent sur une paire de clés asymétrique d'une instance fiable, en particulier d'un éditeur de l'agencement de microcontrôleur, qui comprend une clé secrète (SK.Root) et une clé publique (PK.Root), cependant que les Root Assets sont à disposition dans l'agencement de microcontrôleur, ce qui a lieu en ce qu'ils comprennent :
- la clé publique (PK.Root) de l'instance fiable, mémorisée dans la MCU, accessible au gestionnaire de ressources (RM) ;
- un certificat (Cert.SE) qui est mémorisé dans l'élément de sécurité et qui comprend au moins une signature constituée en utilisant la clé privée (PK.SE) de l'élément de sécurité (SE) et la clé publique (PK.Root) de l'instance fiable, et de préférence en plus la clé publique (SK.SE) de l'élément de sécurité (SE).

8. Agencement de microcontrôleur selon une des revendications de 1 à 7, comprenant en outre un boîtier, cependant que la puce et la puce secondaire sont agencées à l'intérieur du boîtier.

9. Agencement de microcontrôleur selon une des revendications de 1 à 8, comprenant en outre un agent logiciel (SW-Ag) mis en œuvre dans la MCU, lequel est réalisé sous forme de logiciel, en particulier sous forme d'une fonctionnalité de système d'exploitation d'un système d'exploitation de la MCU, et/ou sous forme d'une application mise en œuvre sur la MCU, et lequel est conçu pour supporter la communication entre le gestionnaire de ressources (RM) de la MCU et l'élément de sécurité (SE) au niveau logiciel, en particulier au niveau système d'exploitation et/ou au niveau application.

10. Agencement de microcontrôleur selon une des revendications de 1 à 9, comprenant en outre une application de configuration (KonfApp) sécurisée mise en œuvre dans l'élément de sécurité, par laquelle les fonctionnalités de configuration sont mises en œuvre pour la configuration de composants de ressources (R-C) de la MCU.

11. Agencement de microcontrôleur selon une des revendications de 1 à 10, cependant que le registre compris dans le gestionnaire de ressources (RM) est un registre volatil.
